# EUROPEAN PATENT SPECIFICATION

(11) **EP 1 370 613 B1**
(45) Date of publication and mention of the grant of the patent: **18.10.2006**
(21) Application number: 02704923.8
(22) Date of filing: 07.03.2002
(51) Int. Cl.: C09B 31/10, C09B 31/11, C09D 11/02, D06P 5/00, B41M 5/00

(54) **DISAZO DYES, INK-JET PRINTING INKS AND PROCESSES**
DISAZOFARBSTOFFE, TINTENSTRAHLDRUCKTINTEN UND VERFAHREN
COLORANTS DISAZOÏQUES, ENCRES ET PROCEDES D'IMPRESSION AU JET D'ENCRE

(30) Priority: 14.03.2001 GB 0106345
(43) Date of publication of application: 17.12.2003
(73) Proprietor: FUJIFILM Imaging Colorants Limited, Blackley, Manchester M9 8ZS (GB)
(72) Inventor: GREGORY, Peter, Blackley, Manchester M9 8ZS (GB); FOSTER, Clive Edwin, Blackley, Manchester M9 8ZS (GB); MILLARD, Christine, Blacley, Manchester M9 8ZS (GB)
(74) Representative: Mayall, John
(86) International application number: PCT/GB2002/001028
(87) International publication number: WO 2002/072708

(56) References cited:
- EP-A- 0 527 704
- DE-C- 101 917
- FR-A- 2 294 263
- FR-A- 2 344 599
- GB-A- 1 489 752
- GB-A- 2 006 801
- US-A- 4 399 068
- US-A- 4 626 284

## Description

This invention relates to compounds, to compositions containing these compounds, to inks, to printing processes, to printed substrates and to ink-jet printer cartridges.

Ink-jet printing (IJP) is a non-impact printing technique in which droplets of ink are ejected through a fine nozzle onto a substrate without bringing the nozzle into contact with the substrate.

There are many demanding performance requirements for dyes and inks used in IJP. For example they desirably provide sharp, non-feathered images having good water, light and ozone fastness and high optical density. The inks are often required to dry quickly when applied to a substrate to prevent smudging, but they should not form a crust over the tip of an ink-jet nozzle because this will stop the printer from working. The inks should also be stable to storage over time without decomposing or forming a precipitate which could block the fine nozzle.

A particular problem for photorealistic quality printing is that of light-fastness. Prints are often exposed to daylight for long periods and there is a need for the image to have as good light-fastness as possible. However, at the same time ink-jet photorealistic quality prints have to compete with silver halide photography and so the dyes used in IJP inks cannot be unduly expensive. High light-fastness is also important for prints used on external billboards. The colorants in the print reacting with atmospheric ozone can play a major role in poor light-fastness.

FR-A-2 344 599 discloses inks for celluloses and cellulosic textiles.

DE 101 917 C discloses disazo compounds.

GB A 2 006 801 discloses amino azo compounds.

US-A-4 399 068 discloses concentrated, aqueous solutions of salts of acetoacetylamino-arylsulphonic acids and methods of forming concentrated solutions of azo dyestuffs therefrom.

GB-A-1 489 752 discloses water-soluble disazo dyes and their application to textile materials.

EP-A-0 527 704 discloses dyestuffs containing a disazo component.

US-A-4 626 284 discloses recording liquids containing a black naphthalenedisazoic dye.

This invention relates to colorants suitable for use in ink-jet printing inks and ink-jet printing processes providing ozone-fast and light-fast images.

According to the present invention there is provided a process for coloration of a substrate comprising applying thereto by means of an ink jet printer a composition comprising a medium and a compound of Formula (1): 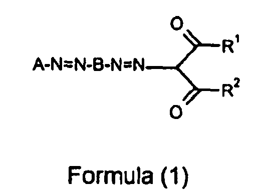 wherein:
- A: is optionally substituted aryl;
- B: is optionally substituted arylene; and
- R¹ and R²: are each independently NR³R⁴, hydroxy, alkoxy or hydrocarbyl;
- R³ and R⁴: are each independently H, alkoxy or C₁₋₃₀ hydrocarbyl or R³ and R⁴ together with the nitrogen atom to which they are attached represent an aliphatic or aromatic ring system.

The ink-jet printer preferably applies the composition to the substrate in the form of droplets which are ejected through a small orifice onto the substrate. Preferred ink-jet printers are piezoelectric ink-jet printers and thermal ink-jet printers. In thermal ink-jet printers, programmed pulses of heat are applied to the composition in a reservoir by means of a resistor adjacent to the orifice, thereby causing the composition to be ejected in the form of small droplets directed towards the paper during relative movement between the substrate and the orifice. In piezoelectric ink-jet printers the oscillation of a small crystal causes ejection of the composition from the orifice. Alternately the ink can be ejected by an electromechanical actuator connected to a moveable paddle or plunger, for example as described in WO 00/48938 and WO 00/55089.

The substrate is preferably paper, plastic, a textile, metal or glass more preferably paper, an overhead projector slide or a textile material, especially paper.

Preferred papers are plain, coated or treated papers which may have an acid, alkaline or neutral character.

Preferably A is optionally substituted phenyl or optionally substituted naphthyl.

Preferably B is optionally substituted phenylene or optionally substituted naphthylene. More preferably A is optionally substituted phenyl and B is optionally substituted phenylene.

Preferred optional substituents which may independently be present on A or B are optionally substituted alkyl (preferably C₁₋₄-alkyl), optionally substituted alkoxy (preferably C₁₋₄-alkoxy), optionally substituted aryl (preferably phenyl), optionally substituted aryloxy (preferably phenoxy), polyalkylene oxide (preferably polyethylene oxide or polypropylene oxide), carboxy, phosphato, sulpho, nitro, cyano, halo, ureido, -SO₂F, hydroxy, ester, -NR⁵R⁶, -COR⁵, -CONR⁵R⁶, -NHCOR⁵, carboxyester, sulphone, and -SO₂NR⁵R⁶ wherein R⁵ and R⁶ are each independently H or optionally substituted alkyl (especially C₁₋₄-alkyl) or, in the case of -CONR⁵R⁶ and -SO₂NR⁵R⁶, R⁵ and R⁶ together with the nitrogen atom to which they are attached represent an aliphatic or aromatic ring system. More preferably the optional substituents which may independently be present on A or B are each independently selected from methyl, ethyl, propyl, butyl, phenyl, methoxy, ethoxy, butoxy, carboxy, phosphato, sulpho, nitro, phenoxy, cyano, carboxyester, sulphone, sulphonamide, ureido, -SO₂NR⁶R⁶ and -NHCOR⁵ groups wherein R⁵ and R⁶ are as hereinbefore defined.

When. A is optionally substituted naphthyl or B is optionally substituted naphthylene then preferably A and/or B carry one or more (preferably 1 to 4) substituents selected from hydroxy, amino, sulpho and carboxy.

When A is optionally substituted phenyl or B is optionally substituted phenylene then preferably A and/or B carry at least one substituent selected from hydroxy, phosphato, amino, sulpho and carboxy. More preferably when A is optionally substituted phenyl or B is optionally substituted phenylene then A and B each independently carry at least one carboxy or sulpho substituent.

Hydrocarbyl groups include linear, branched and cyclic alkyl, alkenyl and alkynyl groups, each of which is optionally substituted and/or interrupted by one or more bivalent radicals, optionally substituted aryl, optionally substituted heteroaryl groups and any combination thereof (such as aralkyl and alkaryl).

Preferably R¹ and R² are each independently; NR³R⁴ (as hereinbefore defined), hydroxy, optionally substituted alkyl, optionally substituted aryl or optionally substituted heteroaryl. When R¹ and R² are NR³R⁴ it is preferred that R³ and R⁴ are each independently H, optionally substituted alkyl, optionally substituted aryl or optionally substituted heteroaryl or R³ and R⁴ together with the nitrogen atom to which they are attached represent an aliphatic or aromatic ring system.

More preferably both of R¹ and R² are -OH or one of R¹ and R² is optionally substituted alkyl (preferably C₁₋₁₈ alkyl, more preferably C₁₋₄-alkyl) and the other is NR³R⁴ wherein R³ and R⁴ are each independently H, optionally substituted alkyl optionally interrupted by one or more bivalent radicals, optionally substituted aryl or optionally substituted heteroaryl or R³ and R⁴ together with the nitrogen atom to which they are attached represent an aliphatic or aromatic ring system.

It is especially preferred that one of R¹ and R² is optionally substituted C₁₋₁₈ alkyl (more preferably C₁₋₄ alkyl) and the other is NR³R⁴ wherein one of R³ and R⁴ is H or C₁₋₄₋alkyl and the other is H, optionally substituted phenyl, optionally substituted pyridyl or optionally substituted anilino.

Optional substituents on R¹, R², R³ and R⁴ are preferably independently selected from those preferred optional substituents for A and B listed above.

Preferably compounds of Formula (1) have 1, 2 or 3 water-dispersing substituents. Preferred water-dispersing substituents are selected from polyalkylene oxides, sulpho, phosphato and carboxy, more preferably sulpho and carboxy.

Preferred polyalkylene oxide groups are poly(C₂₋₃-alkylene oxide) groups, more preferably polyethylene glycol and polypropylene glycol, preferably having from 1 to 20 glycol units and terminated with a hydroxy or C₁₋₄-alkoxy group.

Preferably the compounds of Formula (1) are water-soluble.

Preferably the compounds of Formula (1) do not contain groups reactive with textiles.

It is also preferred that compounds of Formula (1) contain only two azo groups.

In view of the foregoing preferences, in a preferred process the compound of Formula (1) is of Formula (2) as hereinafter described, more preferably of Formula (7) as hereinafter described.

Any acid or basic groups on the compound are preferably in the form of a salt. Thus the Formulae shown herein include the compounds in free acid and in salt form.

Preferred salts are alkali metal salts, especially lithium, sodium and potassium, ammonium and substituted ammonium salts (including quaternary amines such as ((CH₃)₄N⁺) and mixtures thereof. Especially preferred are salts with sodium, lithium, ammonia and volatile amines, more especially sodium salts. The compounds may be converted into a salt using known techniques.

The compounds of Formula (1), (2) and (7) may exist in tautomeric forms other than those shown in this specification. These tautomers are included within the scope of the present invention.

Preferably the composition comprises:
(a) from 0.01 to 30 parts of a compound of Formula (1) as hereinbefore defined, preferably of Formula (2) as hereinafter described, more preferably of Formula (7) as hereinafter described; and
(b) from 70 to 99.99 parts of a medium;
wherein all parts are by weight and the number of parts of (a)+(b)=100.

Preferably the medium is a liquid medium.

The number of parts of component (a) is preferably from 0.1 to 20, more preferably from 0.5 to 15, especially from 1 to 5 parts. The number of parts of component (b) is preferably from 99.9 to 80, more preferably from 99.5 to 85, especially from 99 to 95 parts.

The composition may of course contain further ingredients in addition to (a) and (b).

Preferably component (a) is completely dissolved in component (b). Preferably component (a) has a solubility in component (b) at 20°C of at least 10%. This allows the preparation of liquid concentrates which may be used to prepare more dilute inks and also reduces the chance of component (a) precipitating if evaporation of the liquid medium occurs during storage.

Preferred liquid media include water, a mixture of water and organic solvent and organic solvent free from water.

When the liquid medium comprises a mixture of water and organic solvent, the weight ratio of water to organic solvent is preferably from 99:1 to 1:99, more preferably from 99:1 to 50:50 and especially from 95:5 to 80:20.

It is preferred that the organic solvent present in the mixture of water and organic solvent is a water-miscible organic solvent or a mixture of such solvents. Preferred water-miscible organic solvents include C₁₋₆-alkanols, preferably methanol, ethanol, n-propanol, isopropanol, n-butanol, sec-butanol, tert-butanol, n-pentanol, cyclopentanol and cyclohexanol; linear amides, preferably dimethylformamide or dimethylacetamide; ketones and ketone-alcohols, preferably acetone, methyl ether ketone, cyclohexanone and diacetone alcohol; water-miscible ethers, preferably tetrahydrofuran and dioxane; diols, preferably diols having from 2 to 12 carbon atoms, for example ethylene glycol, propylene glycol, butylene glycol, pentylene glycol, hexylene glycol and thiodiglycol and oligo- and poly-alkyleneglycols, preferably pentane-1,5-diol, diethylene glycol, triethylene glycol, polyethylene glycol and polypropylene glycol; triols, preferably glycerol and 1,2,6-hexanetriol; mono-C₁₋₄-alkyl ethers of diols, preferably mono-C₁₋₄-alkyl ethers of diols having 2 to 12 carbon atoms, especially 2-methoxyethanol, 2-(2-methoxyethoxy)ethanol, 2-(2-ethoxyethoxy)-ethanol, 2-[2-(2-methoxyethoxy)ethoxy]ethanol, 2-[2-(2-ethoxyethoxy)-ethoxy]-ethanol and ethyleneglycol monoallylether; cyclic amides, preferably 2-pyrrolidone, N-methyl-2-pyrrolidone, N-ethyl-2-pyrrolidone, caprolactam and 1,3-dimethylimidazolidone; cyclic esters, preferably caprolactone; sulphoxides, preferably dimethyl sulphoxide and sulpholane. Preferably the liquid medium comprises water and 2 or more, especially from 2 to 8, water-soluble organic solvents.

Especially preferred water-soluble organic solvents are cyclic amides, especially 2-pyrrolidone, N-methyl-pyrrolidone and N-ethyl-pyrrolidone; diols, especially pentane-1,5-diol, ethyleneglycol, thiodiglycol, diethyleneglycol and triethyleneglycol; and mono- C₁₋₄-alkyl and C₁₋₄-alkyl ethers of diols, more preferably mono- C₁₋₄-alkyl ethers of diols having 2 to 12 carbon atoms, especially 2-methoxy-2-ethoxy-2-ethoxyethanol.

Although not usually necessary, further colorants may be added to the composition medium to modify the shade and performance properties of the composition. Examples of such colorants include C.I. Direct Yellow 86, 132, 142 and 173; C.I. Direct Blue 199, and 307; C.I. Food Black 2; C.I. Direct Black 168 and 195; C.I. Acid Yellow 23; and any of the dyes used in ink-jet printers sold by Seiko Epson Corporation, Hewlett Packard Company, Canon Inc. & Lexmark International. Addition of such further colorants can increase overall solubility leading to less kogation (nozzle blockage) for the resultant composition.

Examples of further suitable liquid media comprising a mixture of water and one or more organic solvents are described in US 4,963,189, US 4,703,113, US 4,626,284 and EP 4, 251, 50A.

When the liquid medium comprises organic solvent free from water, (i.e. less than 1 % water by weight) the solvent preferably has a boiling point of from 30° to 200°C, more preferably of from 40° to 150°C, especially from 50 to 125°C. The organic solvent may be water-immiscible, water-miscible or a mixture of such solvents. Preferred water-miscible organic solvents are any of the hereinbefore described water-miscible organic solvents and mixtures thereof. Preferred water-immiscible solvents include, for example, aliphatic hydrocarbons; esters, preferably ethyl acetate; chlorinated hydrocarbons, preferably CH₂Cl₂; and ethers, preferably diethyl ether; and mixtures thereof.

When the liquid medium comprises water-immiscible organic solvent, preferably a polar solvent is included because this enhances solubility of the dye in the liquid medium. Examples of polar solvents include C₁₋₄-alcohols. In view of the foregoing preferences it is especially preferred that where the liquid medium is organic solvent free from water it comprises a ketone (especially methyl ethyl ketone) and/or an alcohol (especially a C₁₋₄₋alkanol, more especially ethanol or propanol).

The organic solvent free from water may be a single organic solvent or a mixture of two or more organic solvents. It is preferred that when the medium is organic solvent free from water it is a mixture of 2 to 5 different organic solvents. This allows a medium to be selected which gives good control over the drying characteristics and storage stability of the composition.

Liquid media comprising organic solvent free from water are particularly useful where fast drying times are required and particularly when printing onto hydrophobic and non-absorbent substrates, for example plastics, metal and glass.

Preferably the composition has been filtered through a filter having a mean pore size below 10µm, more preferably below 3µm, especially below 2µm, more especially below 1µm. This filtration removes particulate matter which could otherwise block the fine nozzles found in many ink-jet printers.

The composition preferably has a total concentration of divalent and trivalent metal ions of below 1000, more preferably below 100, especially below 20, more especially below 10 parts per million by weight relative to the total weight of the composition. Pure compositions of this type may be prepared by using high purity ingredients and/or by purifying the composition after it has been prepared. Suitable purification techniques are well known, e.g. ultrafiltration, reverse osmosis, ion exchange and combinations thereof.

The liquid medium may also of course contain further additives which are conventionally used in ink-jet printing inks, for example viscosity and surface tension modifiers, corrosion inhibitors, biocides, kogation reducing additives and surfactants which may be ionic or non-ionic.

A second aspect of the present invention provides a substrate, especially paper, an overhead projector slide, a textile material, a plastic, glass and metal, printed by a process according to a first aspect of the invention. Preferably the substrate is paper.

Preferred papers are plain, coated or treated papers which may have an acid, alkaline or neutral character.

According to a third aspect of the invention there is provided a composition comprising (a) from 0.1 to 20 parts of a compound of Formula (1) as defined in the first aspect of the present invention and (b) from 99.9 to 80 parts of a medium which comprises a mixture of water and organic solvent or organic solvent free from water wherein all parts are by weight and the number of parts of (a) + (b) = 100.

Preferably the compound of Formula (1) is of Formula (2) as hereinafter defined more preferably the compound of Formula (1) is of Formula (7) as hereinafter defined.

Compositions according to the third aspect of the invention are preferably prepared using high purity ingredients and/or by purifying the composition after it has been prepared. Suitable purification techniques are well known, e.g. ultrafiltration, reverse osmosis, ion exchange and combinations thereof (either before or after they are incorporated in a composition according to the present invention). This purification results in the removal of substantially all of the inorganic salts and by-products resulting from its synthesis. Such purification assists in the preparation of a low viscosity aqueous solution suitable for use in an ink jet printer.

Preferably the composition has been filtered through a filter as described in the first aspect of the invention and has a low concentration of divalent and trivalent metal ions also as described in the first aspect of the invention.

Preferably the composition is an ink-jet printing ink or a liquid dye concentrate. Concentrates are useful as a means for transporting colorant and so minimising costs associated with drying the dye and transporting excess liquid.

A fourth aspect of the present invention provides a compound of Formula (2): 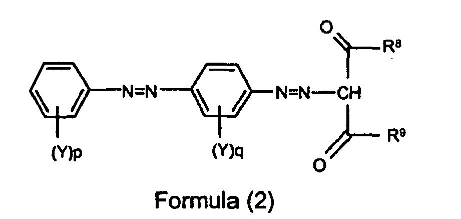 wherein:
- p: is 0 to 5;
- q: is 0 to 4;
- each Y: is independently selected from the group consisting of H, carboxy, phosphato, sulpho, nitro, cyano, halo, ureido, SO₂F, hydroxy, ester; -NR⁵R⁶ -COR⁵, -CONR⁵R⁶, -NHCOR⁵, carboxyester, sulphone, and -SO₂NR⁵R⁶ wherein R⁵ and R⁶ are each independently H or optionally substituted alkyl (especially C₁₋₄-alkyl);
- R⁸: is OH, optionally substituted C₁₋₁₈ alkyl, alkoxy, optionally substituted aryl, optionally substituted heteroaryl;
- R⁹: is OH or NR¹⁰R¹¹;
- R¹⁰: is H or optionally substituted C₁₋₁₈ alkyl; and
- R¹¹: is H, optionally substituted C₁₋₁₈ alkyl, optionally substituted heteroaryl or R¹⁰ and R¹¹ together with the nitrogen atom to
which they are attached represent an aliphatic or aromatic ring system.

Preferably p is 1 or 2, more preferably p is 1.

Preferably q is 1 or 2, more preferably q is 1.

It is preferred that each Y independently is H, sulpho, carboxy, phosphato or chloro. More preferably each Y independently is H, sulpho or carboxy. It is especially preferred that Y is ortho to the azo group linking to the alkyldione.

Preferably R⁸ is OH or optionally substituted C₁₋₄ alkyl, more preferably R⁸ is OH or methyl.

Preferably R¹⁰ is H or optionally substituted C₁₋₄ alkyl, more preferably R⁹ is H or methyl.

Preferably R¹¹ is H, optionally substituted C₁₋₄ alkyl, or optionally substituted pyridyl.

In view of the foregoing preferences, a preferred compound of Formula (2) is of Formula (7): 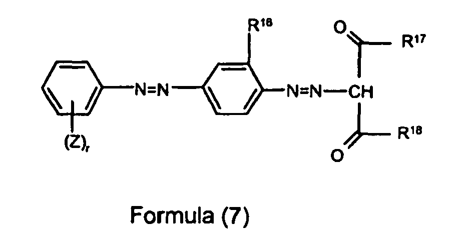 wherein:
- r: is 1 or 2;
- each Z: independently is sulpho or carboxy;
- R¹⁶: is sulpho or carboxy;
- R¹⁷: is OH or optionally substituted C₁₋₄ alkyl;
- R¹⁸: is OH or NR¹⁹R²⁰;
- R¹⁹: is H or optionally substituted C₁₋₄ alkyl and R²⁰ is H, optionally substituted C₁₋₁₈ alky or R¹⁹ and R²⁰ together with the nitrogen atom to which they are attached represent an aliphatic or aromatic ring system.

Preferably when r is 1, Z is a sulpho group para to the azo linking bridge and when r is 2, Z is two carboxy groups meta to the azo linking bridge.

Preferably R¹⁷ is methyl.

Preferably R¹⁹ is H or methyl, more preferably H.

Preferably R²⁰ is H or optionally substituted pyridyl.

A fifth aspect of the present invention provides an ink jet printer cartridge comprising a chamber and a composition wherein the composition is in the chamber and the composition is as described in the first and third aspects of the present invention.

The invention is further illustrated by the following Examples in which all parts and percentages are by weight unless otherwise stated.

### Example 1

### Preparation of:

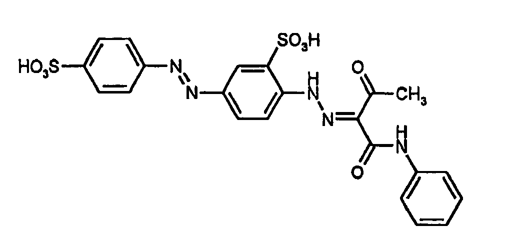

C.I. Acid Yellow 9 (5.9g) was dissolved in water (150ml) at pH 5.6. Sodium nitrite (1.14g) was added and the resulting solution was added to a beaker containing ice (20g) and concentrated hydrochloric acid (7.5ml). The mixture was stirred for 40 minutes maintaining the temperature around 5°C. Sulphamic acid (0.5g) was then added and the resulting solution poured into a beaker containing a stirred solution of acetoacetanilide (2.65g) dissolved in methylated spirit (100ml) and ice (30g). Sodium acetate was added to adjust the pH to 5-6. Water (200ml) was then added. After stirring for 2 hours the reaction was complete. Sodium chloride was added to precipitate the title product. This precipitate was collected by filtration, washed with water and acetone and dried to give a yellow solid which when dissolved in water had a λₘₐₓ = 408nm and εₘₐₓ = 51,600dm³ mol⁻¹ cm⁻¹.

### Example 2

### Preparation of:

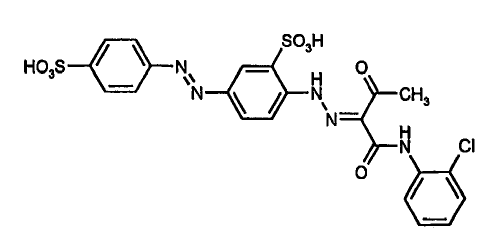

Example 2 was made by the same procedure as in Example 1 except that 2'-chloroacetoacetanilide was used in place of acetoacetanilide. The product was a yellow solid which when dissolved in water had aλₘₐₓ = 406nm. εₘₐₓ = 48,700dm³ mol⁻¹ cm⁻¹.

### Example 3

### Preparation of:

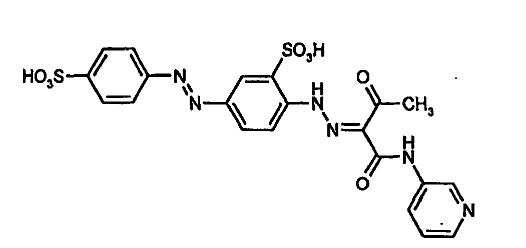

### Step 1

### Preparation of 1-(3-aminopyridyl)-1,3-butadione:

Diketene (15g) was added to a stirred solution of 3-aminopyridine (9.4g) at 0-5°C pH 7. The pH was allowed to fall during the reaction. After 2 hours the reaction mixture was concentrated and the residue recrystallised from ethanol to give 1-(3-aminopyridyl)-1,3-butadione.

### Step 2

### Preparation of the title product:

Example 3, was made by the same procedure as in Example 1 except that 1-(3-aminopyridyl)-1,3-butadione prepared in step 1 was used in place of acetoacetanilide. The product was a yellow solid which when dissolved in water had a λₘₐₓ = 404nm εₘₐₓ = 52,000dm³ mol⁻¹ cm⁻¹.

### Example 4

### Preparation of:

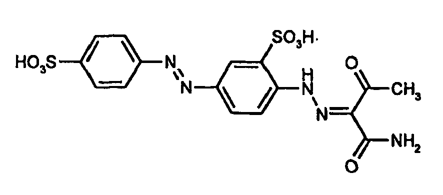

Example 4 was made by the same procedure as in Example 1 except that acetoacetamide was used in place of acetoacetanilide. The product was a yellow solid which when dissolved in water had a λₘₐₓ = 397nm. εₘₐₓ =35,300dm³ mol⁻¹ cm⁻¹.

### Example 5

### Preparation of:

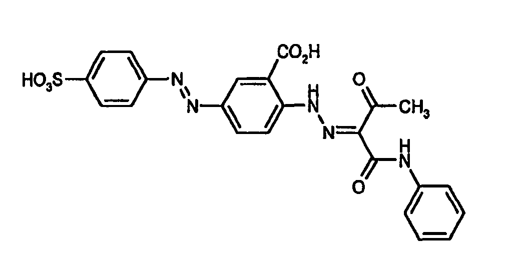

Example 5 was made by the same procedure as in Example 1 except that 3-(phenylazo-4'-sulfonic acid)anthranilic acid was used in place of C.I. Acid Yellow 9. The product was a yellow solid which when dissolved in water had a λₘₐₓ = 416nm.

### Example 6

### Preparation of:

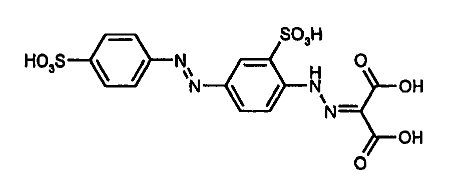

Example 6 was made by the same procedure as in Example 1 except that 2,2-dimethyl-1,3-dioxane-4,6-dione was used in place of acetoacetanilide. The product was a yellow solid which when dissolved in water had a λₘₓ=402nm and εₘₐₓ=32,000 dm³ mol⁻¹ cm⁻¹.

### Example 7

### Preparation of:

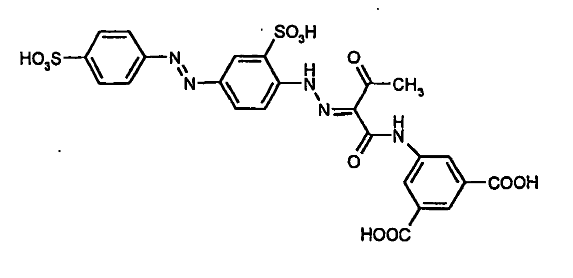

### Step 1,

### Preparation of 3',5'-dicarboxyacetoacetanilide:

The product was made by the same procedure as Example 3 Step 1 but using 5-aminoisophthalic acid in place of 3-aminopyridine.

### Step 2

### Preparation of the title product:

Example 8 was made by the same procedure as in Example 1 except that 3',5'-dicarboxyacetoacetanilide was used in place of acetoacetanilide. The product was a yellow solid which when dissolved in water had a λₘₐₓ=410nm and εₘₐₓ=38,000 dm³ mol⁻¹ cm⁻¹.

### Example 8

### Preparation of:

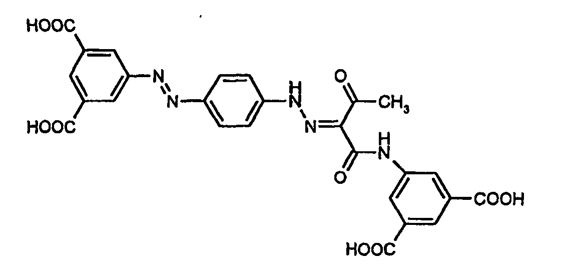

Sulphuric acid (20g) was stirred at 5°C. Sodium nitrite (0.8g) was added followed by 86:14 acetic:propionic acid (20g), and 4'-amino-3,5-dicarboxyazobenzene (4g). The mixture was stirred for 60 minutes maintaining the temperature around 5°C. The solution was poured into a beaker containing a stirred solution of 3',5'-dicarboxyacetoacetanilide (4g),sulfamic acid (0.5g) and ice (30g). Sodium acetate was added to adjust the pH to 5-6. After stirring for 4 hours the reaction was complete. The precipitate was collected by filtration, washed with water and dried to give a yellow solid which when dissolved in water had a λₘₐₓ=410nm and εₘₐₓ=24,000 dm³ mol⁻¹ cm⁻¹.

### Example 9

### Preparation of:

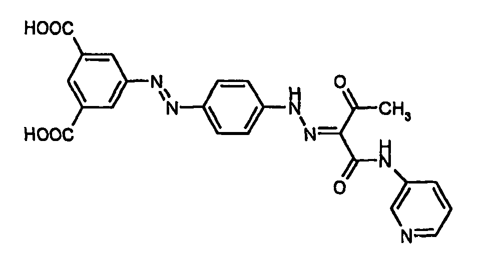

Example 10 was made by the same procedure as Example 9 except that 1-(3-aminopyridyl)-1,3-butadione prepared in Example 3 Step 1 was used in place of 3',5'-dicarboxyacetoacetanilide. The product was a yellow solid which when dissolved in water had a λₘₐₓ=40Bnm and εₘₐₓ=34,000 dm³ mol⁻¹ cm⁻¹.

### Example 10

### Preparation of:

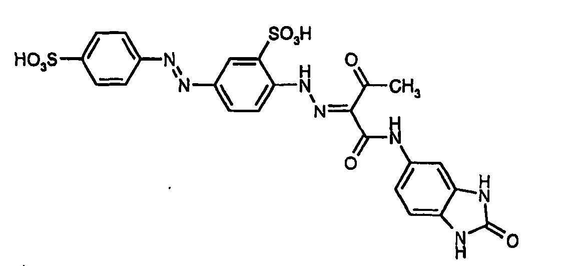

Example 7 was made by the same procedure as in Example 1 except that 3-oxo-N-(2-oxo-2,3-dihydro-1H-benzoimidazol-5-yl)-butyramide was used in place of acetoacetanilide. The product was a yellow solid which when dissolved in water had a λₘₐₓ= 414nm and εₘₐₓ= 40,000dm³ mol⁻¹ cm⁻¹.

### Example 11

### Preparation of:

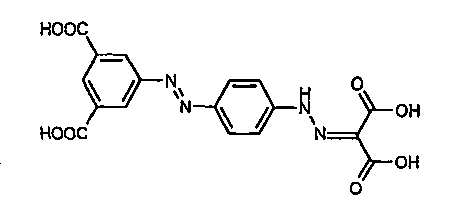

Example 12 was made by the same procedure as in Example 9 except that 2,2-dimethyl-1,3-dioxane-4,6-dione was used in place of 3',5'-dicarboxyacetoacetanilide. The product was a yellow solid which when dissolved in water had a λₘₐₓ=405nm and εₘₐₓ=24,000 dm³ mol⁻¹ cm⁻¹.

### Example 12

### Preparation of:

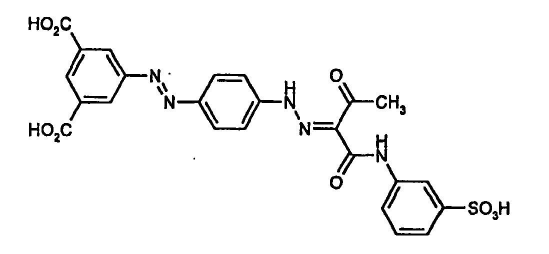

Example 12 was made by the same procedure as Example 1 except that 3'-sulfoacetoacetanilide was used in place of acetoacetanilide and 4'-amino-3,5-dicarboxyazobenzene was used in place od C.I. Acid Yellow 9. The product was a yellow solid.

### Examples 13 to 16

### Preparation of inks

The compounds of Examples 1, 4, 6 and 12 (3g) were dissolved in 100 ml of a liquid medium consisting of 2-pyrrolidone/thiodiglycol/Sufynol 465 in a weight ratio of 5:5:1. The compound used in the ink examples is shown in Table 1.

**Table 1**

| Compound | Ink Example |
|---|---|
| Example 1 | Example 13 |
| Example 4 | Example 14 |
| Example 6 | Example 15 |
| Example 12 | Example 16 |

### Example 17

### Ink-jet Printing

The inks described in Examples 13 to 16 were ink jet printed onto a variety of papers using a Hewlett Packard DeskJet 550C^{™}. The CIE colour co-ordinates of each print (a, b, L, Chroma and hue) were measured using a Xrite 983 Spectrodensitometer^{™} with 0°/45° measuring geometry with a spectral range of 400-700nm at 20nm spectral intervals, using illuminant C with a 2° (CIE 1931) observer angle and a density operation of status T. No less than 2 measurements were taken diagonally across a solid colour block on the print with a size greater than 10mm x 10mm. The properties of the resultant prints are shown in Table 2.

**Table 2**

| **Ink** | **Paper** | **% Depth** | **L** | **a** | **b** | **C** | **h** |
|---|---|---|---|---|---|---|---|
| Example 13 | X Acid^{™} | 100% | 84 | 11 | 78 | 79 | 82 |
| Example 13 | X Acid^{™} | 50% | 87 | 4 | 66 | 66 | 86 |
| Example 13 | HP Printing^{™} | 100% | 84 | 10 | 74 | 75 | 82 |
| Example 13 | HP Printing^{™} | 50% | 87 | 3 | 60 | 60 | 87 |
| Example 13 | HR101^{™} | 100% | 84 | 11 | 92 | 93 | 83 |
| Example 13 | HR101^{™} | 50% | 87 | 1 | 74 | 74 | 89 |
| Example 13 | Epson PM^{™} | 100% | 87 | 4 | 99 | 99 | 88 |
| Example 13 | Epson PM^{™} | 50% | 90 | -4 | 79 | 79 | 93 |
| Example 13 | HP Premium^{™} | 100% | 84 | 12 | 100 | 101 | 83 |
| Example 13 | HP Premium^{™} | 50% | 87 | 3 | 78 | 78 | 88 |
| Example 13 | Kodak Picture^{™} | 100% | 83 | 13 | 97 | 98 | 82 |
| Example 13 | Kodak Picture^{™} | 50% | 87 | 3 | 78 | 78 | 88 |
| Example 14 | X Acid^{™} | 100% | 82 | 12 | 71 | 72 | 81 |
| Example 14 | X Acid^{™} | 50% | 86 | 4 | 62 | 62 | 87 |
| Example 14 | HP Printing^{™} | 100% | 82 | 11 | 69 | 70 | 81 |
| Example 14 | HP Printing^{™} | 50% | 85 | 3 | 58 | 58 | 87 |
| Example 14 | HR101^{™} | 100% | 86 | 1 | 67 | 67 | 89 |
| Example 14 | HR101^{™} | 50% | 92 | -3 | 24 | 25 | 97 |
| Example 14 | Epson PM^{™} | 100% | 86 | 2 | 86 | 86 | 88 |
| Example 14 | Epson PM^{™} | 50% | 90 | -5 | 66 | 66 | 94 |
| Example 14 | HP Premium^{™} | 100% | 82 | 11 | 89 | 90 | 83 |
| Example 14 | HP Premium^{™} | 50% | 87 | 2 | 71 | 71 | 88 |
| Example 14 | Kodak Picture^{™} | 100% | 82 | 11 | 87 | 87 | 83 |
| Example 14 | Kodak Picture^{™} | 50% | 87 | 3 | 71 | 71 | 88 |
| Example 15 | X Acid^{™} | 100% | 85 | 9 | 84 | 84 | 84 |
| Example 15 | X Acid^{™} | 50% | 88 | 1 | 72 | 72 | 89 |
| Example 15 | HP Printing^{™} | 100% | 84 | 8 | 83 | 83 | 85 |
| Example 15 | HP Printing^{™} | 50% | 87 | 1 | 69 | 69 | 89 |
| Example 15 | HR101^{™} | 100% | 85 | 8 | 99 | 99 | 85 |
| Example 15 | HR101^{™} | 50% | 87 | 0 | 81 | 81 | 90 |
| Example 15 | Epson PM^{™} | 100% | 88 | -1 | 95 | 95 | 90 |
| Example 15 | Epson PM^{™} | 50% | 91 | -7 | 73 | 73 | 95 |
| Example 15 | HP Premium^{™} | 100% | 86 | 6 | 100 | 100 | 87 |
| Example 15 | HP Premium^{™} | 50% | 89 | -1 | 77 | 77 | 91 |
| Example 15 | Kodak Picture^{™} | 100% | 86 | 7 | 94 | 95 | 86 |
| Example 15 | Kodak Picture^{™} | 50% | 89 | 0 | 75 | 75 | 90 |
| Example 16 | X Acid^{™} | 100% | 83 | 11 | 75 | 76 | 82 |
| Example 16 | X Acid^{™} | 50% | 87 | 4 | 60 | 60 | 87 |
| Example 16 | HP Printing^{™} | 100% | 83 | 9 | 68 | 68 | 82 |
| Example 16 | HP Printing^{™} | 50% | 87 | 3 | 50 | 50 | 87 |
| Example 16 | HR101^{™} | 100% | 84 | 10 | 85 | 86 | 84 |
| Example 16 | HR101^{™} | 50% | 87 | 2 | 63 | 63 | 89 |
| Example 16 | Epson PM^{™} | 100% | 87 | 3 | 87 | 87 | 88 |
| Example 16 | Epson PM^{™} | 50% | 90 | -3 | 61 | 61 | 93 |
| Example 16 | HP Premium^{™} | 100% | 85 | 8 | 77 | 78 | 84 |
| Example 16 | HP Premium^{™} | 50% | 88 | 2 | 56 | 56 | 88 |
| Example 16 | Kodak Picture^{™} | 100% | 84 | 11 | 83 | 84 | 83 |
| Example 16 | Kodak Picture^{™} | 50% | 88 | 3 | 63 | 63 | 87 |

### Light Fastness

To evaluate light fastness the prints were irradiated in an Atlas Ci35 WeatherometeR^{™} for 100 hours. The results are shown in Table 3 where degree of fade is expressed as ΔE where a lower figure indicates higher light fastness. ΔE is defined as the overall change in the CIE colour co-ordinates L, a, b of the print and is expressed by the equation ΔE = (ΔL² + Δa² + Δb²)^{0.5}

**Table 3**

| Ink | Paper | ΔE |
|---|---|---|
| Example 13 | X Acid^{™} | 34 |
| Example 13 | HP Printing^{™} | 34 |
| Example 13 | HR101^{™} | 56 |
| Example 13 | Epson PM^{™} | 42 |
| Example 13 | HP Premium^{™} | 9 |
| Example 13 | Kodak Picture^{™} | 62 |
| Example 13 | X Acid^{™} | 18 |
| Example 14 | HP Printing^{™} | 23 |
| Example 14 | HR101^{™} | 43 |
| Example 14 | Epson PM^{™} | 17 |
| Example 14 | HP Premium^{™} | 5 |
| Example 14 | Kodak Picture^{™} | 52 |
| Example 15 | X Acid^{™} | 35 |
| Example 15 | HP Printing^{™} | 46 |
| Example 15 | HR101^{™} | 67 |
| Example 15 | Epson PM^{™} | 26 |
| Example 15 | HP Premium^{™} | 27 |
| Example 15 | Kodak Picture^{™} | 54 |
| Example 16 | X Acid^{™} | 35 |
| Example 16 | HP Printing^{™} | 34 |
| Example 16 | HR101^{™} | 49 |
| Example 16 | Epson PM^{™} | 39 |
| Example 16 | HP Premium^{™} | 34 |
| Example 16 | Kodak Picture^{™} | 52 |

### Ozone Fastness

Examples 13 to 16 were printed onto the substrate shown using a Canon 4300^{™} IJ printer. The printed substrate was then assessed for ozone stability using an ozone test cabinet from Hampden Test Equipment. The test was carried out for two and a half hours at 40°C and 55% relative humidity in the presence of 400 parts per hundred million of ozone. Fastness of the printed ink to ozone was judged by the difference in the optical density before and after exposure to ozone using an Xrite 983^{™} Spectrodensitometer. Thus, the lower the %OD loss the greater the ozone fastness. Results are shown below in Table 4 and these clearly demonstrate that inks based on compounds of this invention display good ozone fastness.

**Table 4**

| Ink | Paper | % loss of OD |
|---|---|---|
| Example 13 | HR101^{™} | 15% |
| Example 13 | Epson PM^{™} | 19% |
| Example 13 | HP Premium^{™} | 4% |
| Example 13 | Kodak Picture^{™} | 2% |
| Example 14 | HR101^{™} | 18% |
| Example 14 | Epson PM^{™} | 27% |
| Example 14 | HP Premium^{™} | 3% |
| Example 14 | Kodak Picture^{™} | 4% |
| Example 15 | HR101^{™} | 38 |
| Example 15 | Epson PM^{™} | 52 |
| Example 15 | HP Premium^{™} | 3 |
| Example 15 | Kodak Picture^{™} | 3 |
| Example 16 | HR101^{™} | 15 |
| Example 16 | Epson PM^{™} | 13 |
| Example 16 | HP Premium^{™} | 1 |
| Example 16 | Kodak Picture^{™} | 3 |

### Inks and ink-jet printing

The compounds described in Examples 1 to 12 may be formulated into inks by dissolving in a suitable liquid medium and filtering the solution through a 0.45µm filter. For example a suitable ink comprises 3.5 parts of the compound in 96.5 parts of a liquid medium consisting of:
5 parts 2-pyrrolidone
5 parts thiodiglycol
2 parts Surfynol^{™} 465 (a non-ionic surfactant available from Air Products Inc.); and
88 parts water.

When ink-jet printed on to paper, the inks provide prints which are a bright yellow shade with a high water-fastness, good light-fastness, good ozone-fastness and a high optical density.

### Further Inks

The inks described in Tables I and II may be prepared wherein the Dye described in the first column is the compound made in the above example of the same number. Numbers quoted in the second column onwards refer to the number of parts of the relevant ingredient and all parts are by weight. The inks may be applied to paper by thermal or piezo ink-jet printing.

The following abbreviations are used in Table I and II:
PG = propylene glycol
DEG = diethylene glycol
NMP = N-methyl pyrollidone
DMK = dimethylketone
IPA = isopropanol
MEOH = methanol
2P = 2-pyrrolidone
MIBK = methylisobutyl ketone
P12 = propane-1,2-diol
BDL = butane-2,3-diol
CET= cetyl ammonium bromide
PHO = Na₂HPO₄ and
TBT = tertiary butanol
TDG = thiodiglycol

**TABLE I**

| Example | Dye Content | Water | PG | DEG | NMP | DMK | NaOH | Na Stearate | IPA | MEOH | 2P | MIBK |
|---|---|---|---|---|---|---|---|---|---|---|---|---|
| 1 | 2.0 | 80 | 5 | | 6 | 4 | | | | | 5 | |
| 2 | 3.0 | 90 | | 5 | 5 | | 0.2 | | | | | |
| 3 | 10.0 | 85 | 3 | | 3 | 3 | | | | 5 | 1 | |
| 4 | 2.1 | 91 | | 8 | | | | | | | | 1 |
| 5 | 3.1 | 86 | 5 | | | | | 0.2 | 4 | | | 5 |
| 6 | 1.1 | 81 | | | 9 | | 0.5 | 0.5 | | | 9 | |
| 7 | 2.5 | 60 | 4 | 15 | 3 | 3 | | | 6 | 10 | 5 | 4 |
| 8 | 5 | 65 | | 20 | | | | | 10 | | | |
| 9 | 2.4 | 75 | 5 | 4 | | 5 | | | | 6 | | 5 |
| 10 | 4.1 | 80 | 3 | 5 | 2 | 10 | | 0.3 | | | | |
| 11 | 3.2 | 65 | | 5 | 4 | 6 | | | 5 | 4 | 6 | 5 |
| 12 | 5.1 | 96 | | | | | | | | 4 | | |
| 1 | 10.8 | 90 | 5 | | | | | | 5 | | | |
| 2 | 10.0 | 80 | 2 | 6 | 2 | 5 | | | 1 | | 4 | |
| 3 | 1.8 | 80 | | 5 | | | | | | | 15 | |
| 4 | 2.6 | 84 | | | 11 | | | | | | 5 | |
| 1 | 3.3 | 80 | 2 | | | 10 | | | | 2 | | 6 |
| 1 | 12.0 | 90 | | | | 7 | 0.3 | | 3 | | | |
| 1 | 5.4 | 69 | 2 | 20 | 2 | 1 | | | | | 3 | 3 |
| 1 | 6.0 | 91 | | | 4 | | | | | | 5 | |

**TABLE II**

| Example | Dye Content | Water | PG | DEG | NMP | CET | TBT | TDG | BDL | PHO | 2P | P12 |
|---|---|---|---|---|---|---|---|---|---|---|---|---|
| 1 | 3.0 | 80 | 15 | | | 0.2 | | | | | 5 | |
| 2 | 9.0 | 90 | | 5 | | | | | | 1.2 | | 5 |
| 3 | 1.5 | 85 | 5 | 5 | | 0.15 | 5.0 | 0.2 | | | | |
| 4 | 2.5 | 90 | | 6 | 4 | | | | | 0.12 | | |
| 5 | 3.1 | 82 | 4 | 8 | | 0.3 | | | | | | 6 |
| 6 | 0.9 | 85 | | 10 | | | | | 5 | 0.2 | | |
| 7 | 8.0 | 90 | | 5 | 5 | | | 0.3 | | | | |
| 8 | 4.0 | 70 | | 10 | 4 | | | | 1 | | 4 | 11 |
| 9 | 2.2 | 75 | 4 | 10 | 3 | | | | 2 | | 6 | |
| 10 | 10.0 | 91 | | | 6 | | | | | | 3 | |
| 11 | 9.0 | 76 | | 9 | 7 | | 3.0 | | | 0.95 | 5 | |
| 12 | 5.0 | 78 | 5 | 11 | | | | | | | 6 | |
| 2 | 5.4 | 86 | | | 7 | | | | | | 7 | |
| 3 | 2.1 | 70 | 5 | 5 | 5 | 0.1 | 0.2 | 0.1 | 5 | 0.1 | 5 | |
| 4 | 2.0 | 90 | | 10 | | | | | | | | |
| 1 | 2 | 88 | | | | | | 10 | | | | |
| 1 | 5 | 78 | | | 5 | | | 12 | | | 5 | |
| 1 | 8 | 70 | 2 | | 8 | | | 15 | | | 5 | |
| 1 | 10 | 80 | | | | | | 8 | | | 12 | |
| | 10 | 80 | | 10 | | | | | | | | |

## Claims

1. A process for coloration of a substrate comprising applying thereto by means of an ink jet printer a composition comprising a medium and a compound of Formula (1): 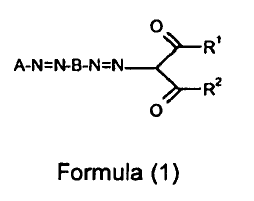 wherein:
A is optionally substituted aryl;
B is optionally substituted arylene; and
R¹ and R² are each independently NR³R⁴, hydroxy, alkoxy or hydrocarbyl;
R³ and R⁴ are each independently H, alkoxy or C₁₋₃₀ hydrocarbyl or R³ and R⁴ together with the nitrogen atom to which they are attached represent an aliphatic or aromatic ring system.

2. An ink-jet printing process according to claim 1 wherein in the compound of Formula (1) A is optionally substituted phenyl and B is optionally substituted phenylene.

3. An ink-jet printing process according to either claim 1 or claim 2 wherein in the compound of Formula (1) one of R¹ and R² is optionally substituted C₁₋₁₈ alkyl and the other is NR³R⁴ wherein one of R³ and R⁴ is H or C₁₋₄-alkyl and the other is H, optionally substituted phenyl or optionally substituted pyridyl.

4. An ink-jet printing process according to any one of the preceding claims wherein the medium is a liquid medium.

5. A substrate, printed by a process according to any one of claims 1 to 4.

6. A composition comprising (a) from 0.1 to 20 parts of a compound of Formula (1) as defined in any one of claims 1 to 3 and (b) from 99.9 to 80 parts of a medium which comprises a mixture of water and organic solvent or organic solvent free from water wherein all parts are by weight and the number of parts of (a) + (b) = 100.

7. A composition according to claim 6 which has been filtered through a filter having a mean pore size below 10µm.

8. A composition according to either claim 6 or claim 7 with a total concentration of divalent and trivalent metal ions of below 1000 ppm.

9. A composition according to any one of claims 6 to 8 which is an ink-jet printing ink or a liquid dye concentrate.

10. A compound of Formula (2): 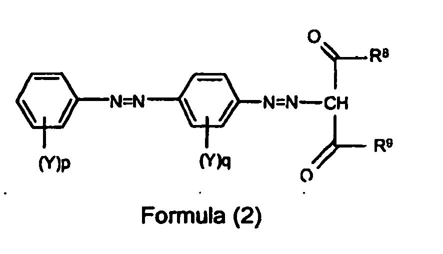 wherein:
p is 0 to 5;
q is 0 to 4;
each Y is independently selected from the group consisting of H, carboxy, phosphato, sulpho, nitro, cyano, halo, ureido, SO₂F, hydroxy, ester; -NR⁵R⁶ -COR⁵, -CONR⁵R⁶, -NHCOR⁵, carboxyester, sulphone, and -SO₂NR⁵R⁶ wherein R⁵ and R⁶ are each independently H or optionally substituted alkyl (especially C₁₋₄-alkyl);
R⁸ is OH, optionally substituted C₁₋₁₈ alkyl, alkoxy, optionally substituted aryl, optionally substituted heteroaryl;
R⁹ is OH or NR¹⁰R¹¹;
R¹⁰ is H or optionally substituted C₁₋₁₈ alkyl; and
R¹¹ is H, optionally substituted C₁₋₈ alkyl, optionally substituted heteroaryl or R¹⁰ and R¹¹ together with the nitrogen atom to which they are attached represent an aliphatic or aromatic ring system.

11. A compound according to claim 10 wherein the compound of Formula (2) is of Formula (7): 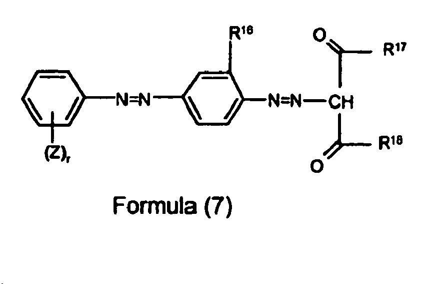 wherein:
r is 1 or 2;
each Z independently is sulpho or carboxy;
R¹⁶ is sulpho or carboxy;
R¹⁷ is OH or optionally substituted C₁₋₄ alkyl;
R¹⁸ is OH or NR¹⁹R²⁰;
R¹⁹ is H or optionally substituted C₁₋₄ alkyl and R²⁰ is H, optionally substituted C₁₋₁₈ alkyl, or R¹⁹ and R²⁰ together with the nitrogen atom to which they are attached represent an aliphatic or aromatic ring system.

12. An ink jet printer cartridge comprising a chamber and a composition wherein the composition is in the chamber and the composition is as described in any one of claims 6 to 9.

## Patentansprüche

1. Verfahren zum Kolorieren eines Substrats, bei dem man eine Zusammensetzung, enthaltend ein Medium und eine Verbindung der Formel (1): 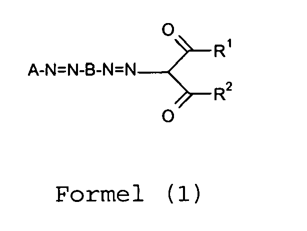 wobei:
A gegebenenfalls substituiertes Aryl,
B gegebenenfalls substituiertes Arylen,
R¹ und R² unabhängig voneinander jeweils NR³R⁴, Hydroxy, Alkoxy oder Hydrocarbyl und
R³ und R⁴ unabhängig voneinander jeweils H, Alkoxy oder C₁₋₃₀-Hydrocarbyl bedeuten oder R³ und R⁴ zusammen mit dem sie verbindenden Stickstoffatom ein aliphatisches oder aromatisches Ringsystem bilden,
mit dem Tintenstrahldrucker darauf aufträgt.

2. Tintenstrahldruckverfahren nach Anspruch 1, bei dem in der Verbindung der Formel (1) A gegebenenfalls substituiertes Phenyl und B gegebenenfalls substituiertes Phenylen bedeutet.

3. Tintenstrahldruckverfahren nach einem der Ansprüche 1 oder 2, bei dem in der Verbindung der Formel (1) einer der Reste R¹ und R² gegebenenfalls substituiertes C₁₋₁₈-Alkyl und der andere NR³R⁴ mit einem der Reste R³ und R⁴ in der Bedeutung H oder C₁₋₄-Alkyl und dem anderen in der Bedeutung H, gegebenenfalls substituiertes Phenyl oder gegebenenfalls substituiertes Pyridyl bedeutet.

4. Tintenstrahldruckverfahren nach einem der vorhergehenden Ansprüche, bei dem man ein flüssiges Medium einsetzt.

5. Substrat, bedruckt nach einem Verfahren gemäß einem der Ansprüche 1 bis 4.

6. Zusammensetzung, enthaltend (a) 0,1 bis 20 Teile einer Verbindung der Formel (1) gemäß einem der Ansprüche 1 bis 3 und (b) 99,9 bis 80 Teile eines Mediums, enthaltend eine Mischung von Wasser und organischem Lösungsmittel oder wasserfreies organisches Lösungsmittel, wobei es sich bei allen Teilen um Gewichtsteile handelt und die Anzahl der Teile (a) + (b) = 100 beträgt.

7. Zusammensetzung nach Anspruch 6 nach Filtration über ein Filter mit einer mittleren Porengröße von kleiner 10µm.

8. Zusammensetzung nach einem der Ansprüche 6 oder 7 mit einer Gesamtkonzentration an zwei- und dreiwertigen Metallionen von weniger als 1000 ppm.

9. Zusammensetzung nach einem der Ansprüche 6 bis 8, bei der es sich um eine Tintenstrahldrucktinte oder um ein flüssiges Farbstoffkonzentrat handelt.

10. Verbindung der Formel (2): 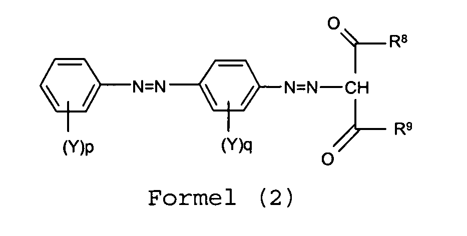 wobei die Formelglieder folgende Bedeutung haben:
p ist 0 bis 5,
q ist 0 bis 4,
Y sind unabhängig voneinander jeweils ausgewählt aus der Gruppe, bestehend aus H, Carboxy, Phosphato, Sulfo, Nitro, Cyano, Halogen, Ureido, SO₂F, Hydroxy, Ester, -NR⁵R⁶, -COR⁵, -CONR⁵R⁶, -NHCOR⁵, Carboxyester, Sulfon und -SO₂NR⁵R⁶, wobei R⁵ und R⁶ unabhängig voneinander jeweils H oder gegebenenfalls substituiertes Alkyl, insbesondere C₁₋₄-Alkyl, sind,
R⁸ ist OH, gegebenenfalls substituiertes C₁₋₁₈₋Alkyl, Alkoxy, gegebenenfalls substituiertes Aryl, gegebenenfalls substituiertes Heteroaryl,
R⁹ ist OH oder NR¹⁰R¹¹,
R¹⁰ ist H oder gegebenenfalls substituiertes C₁₋₁₈₋Alkyl, und
R¹¹ ist H, gegebenenfalls substituiertes C₁₋₁₈₋Alkyl, gegebenenfalls substituiertes Heteroaryl oder R¹⁰ und R¹¹ bilden zusammen mit dem sie verbindenden Stickstoffatom ein aliphatisches oder aromatisches Ringsystem.

11. Verbindung nach Anspruch 10, bei der die Verbindung der Formel (2) der Formel (7) entspricht: 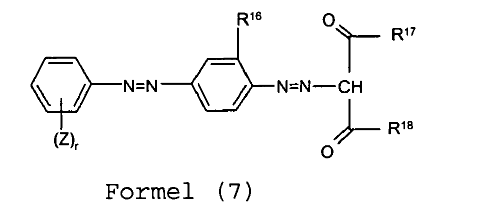 wobei die Formelglieder folgende Bedeutung haben:
r ist 1 oder 2,
Z sind unabhängig voneinander jeweils Sulfo oder Carboxy,
R¹⁶ ist Sulfo oder Carboxy,
R¹⁷ ist OH oder gegebenenfalls substituiertes C₁₋₄-Alkyl,
R¹⁸ ist OH oder NR¹⁹R²⁰,
R¹⁹ ist H oder gegebenenfalls substituiertes C₁₋₄₋Alkyl und R²⁰ ist H, gegebenenfalls substituiertes C₁₋₁₈-Alkyl oder R¹⁹ und R²⁰ bilden zusammen mit dem sie verbindenden Stickstoffatom ein aliphatisches oder aromatisches Ringsystem.

12. Tintenstrahldruckerpatrone mit einer Kammer und einer Zusammensetzung, bei der die Zusammensetzung in der Kammer enthalten ist und einem der Ansprüche 6 bis 9 entspricht.

## Revendications

1. Procédé de coloration d'un substrat comprenant l'application sur ce substrat, au moyen d'une imprimante à jet d'encre, d'une composition comprenant un milieu et un composé de formule (1) : 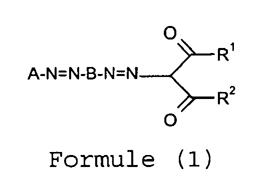 dans laquelle :
A représente un groupe aryle éventuellement substitué ;
B représente un groupe arylène éventuellement substitué ; et
R¹ et R² représentent chacun indépendamment des groupes NR³R⁴, hydroxy, alcoxy ou hydrocarbyle ;
R³ et R⁴ représentent chacun indépendamment H, un groupe alcoxy ou un groupe hydrocarbyle en C₁₋₃₀, ou bien R³ et R⁴ représentent, conjointement avec l'atome d'azote auquel ils sont fixés, un système de noyau aliphatique ou aromatique.

2. Procédé d'impression par jet d'encre selon la revendication 1 dans lequel, dans le composé de formule (1), A représente un groupe phényle éventuellement substitué et B représente un groupe phénylène éventuellement substitué.

3. Procédé d'impression par jet d'encre selon la revendication 1 ou la revendication 2 dans lequel, dans le composé de formule (1), un des symboles R¹ et R² représente un groupe alkyle en C₁₋₁₈ éventuellement substitué et l'autre représente NR³R⁴ où un des symboles R³ et R⁴ représente H ou un groupe alkyle en C₁₋₄ et l'autre représente H, un groupe phényle éventuellement substitué ou un groupe pyridyle éventuellement substitué.

4. Procédé d'impression par jet d'encre selon l'une quelconque des revendications précédentes dans lequel le milieu est un milieu liquide.

5. Substrat, imprimé par un procédé selon l'une quelconque des revendications 1 à 4.

6. Composition comprenant (a) de 0,1 à 20 parties d'un composé de formule (1) tel que défini dans l'une quelconque des revendications 1 à 3 et (b) de 99,9 à 80 parties d'un milieu qui comprend un mélange d'eau et de solvant organique ou un solvant organique sans eau, dans laquelle toutes les parties sont en poids et le nombre de parties de (a) + (b) = 100.

7. Composition selon la revendication 6 qui a été filtrée à travers un filtre ayant une taille moyenne de pore inférieure à 10 µm.

8. Composition selon la revendication 6 ou la revendication 7 ayant une concentration totale en ions métalliques divalents et trivalents inférieure à 1 000 ppm.

9. Composition selon l'une quelconque des revendications 6 à 8 qui est une encre d'impression par jet d'encre ou un concentré de colorant liquide.

10. Composé de formule (2) : 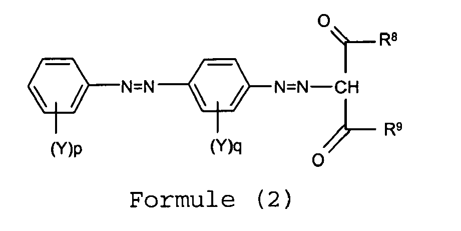 dans laquelle :
p a une valeur de 0 à 5 ;
q a une valeur de 0 à 4 ;
chaque Y est choisi indépendamment dans le groupe constitué par H et les groupes carboxy, phosphato, sulfo, nitro, cyano, halogéno, uréido, SO₂F, hydroxy, ester, -NR⁵R⁶ -COR⁵, -CONR⁵R⁶, -NHCOR⁵, carboxyester, sulfone, et -SO₂NR⁵R⁶ où R⁵ et R⁶ représentent chacun indépendamment H ou un groupe alkyle éventuellement substitué (en particulier alkyle en C₁₋₄) ;
R⁸ représente un groupe OH, alkyle en C₁₋₁₈ éventuellement substitué, alcoxy, aryle éventuellement substitué, hétéroaryle éventuellement substitué ;
R⁹ représente un groupe OH ou NR¹⁰R¹¹;
R¹⁰ représente H ou un groupe alkyle en C₁₋₁₈ éventuellement substitué ; et
R¹¹ représente H ou un groupe alkyle en C₁₋₁₈ éventuellement substitué, hétéroaryle éventuellement substitué, ou bien R¹⁰ et R¹¹ représentent, conjointement avec l'atome d'azote auquel ils sont fixés, un système de noyau aliphatique ou aromatique.

11. Composé selon la revendication 10 dans lequel le composé de formule (2) a pour formule (7) : 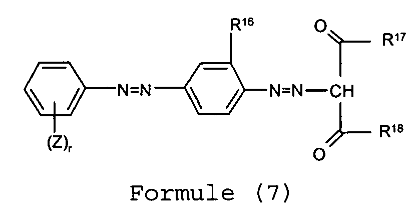 dans laquelle :
r a une valeur de 1 ou 2 ;
chaque Z représente indépendamment un groupe sulfo ou carboxy ;
R¹⁶ représente un groupe sulfo ou carboxy ;
R¹⁷ représente OH ou un groupe alkyle en C₁₋₄ éventuellement substitué ;
R¹⁸ représente OH ou NR¹⁹R²⁰*;*
R¹⁹ représente H ou un groupe alkyle en C₁₋₄ éventuellement substitué et R²⁰ représente H ou un groupe alkyle en C₁₋₁₈ éventuellement substitué, ou bien R¹⁹ et R²⁰ représentent, conjointement avec l'atome d'azote auquel ils sont fixés, un système de noyau aliphatique ou aromatique.

12. Cartouche d'imprimante à jet d'encre comprenant un compartiment et une composition, dans laquelle la composition se trouve dans le compartiment et la composition est telle que décrite dans l'une quelconque des revendications 6 à 9.
